# EUROPEAN PATENT SPECIFICATION

(11) **EP 2 316 312 B1**
(45) Date of publication and mention of the grant of the patent: **11.06.2014**
(21) Application number: 10186713.3
(22) Date of filing: 06.10.2010
(51) Int. Cl.: A47J 31/40

(54) **Coffee machine**
Kaffeemaschine
Machine à café

(30) Priority: 29.10.2009 LB 880309
(43) Date of publication of application: 04.05.2011
(73) Proprietor: Research, Investment & Development S.A.L. (Holding), Beirut (LB)
(72) Inventor: Al Najjar, George Michel, Beirut (LB)
(74) Representative: Viering, Jentschura & Partner Patent- und Rechtsanwälte

(56) References cited:
- DE-A1-102006 002 511
- FR-A- 1 564 088
- US-A1- 2002 050 301

## Description

### Background of the invention:

The present coffee machines in the market are mainly classified into two types both for stewing Turkish coffee:
The first is a patent registered in Lebanon under the number (6203/2000 ) and it works by taking the grounded coffee for a replaceable cartridge containing 500 grams of grounded coffee. The coffee descends through a mechanical cylinder that volumetrically estimates the quantity of grounded coffee beans in every cup.
The second also stews the coffee and the quantity of the coffee added by the person preparing the coffee.

In the prior designs, many major weak points that were found are resolved:
- The coffee packed in large quantities. Once opened, the coffee loses its freshness if not used within a short period of time.
- The coffee doses extracted, by the machine, out of the coffee cartridge are not very accurate.
- The coffee prepared didn't have a constant taste due to the different quantities of coffee in every cup.
- The steam from the boiler affects the cartridge and moistens the coffee beans in the cartridge.
- The intervention of the person preparing the coffee creates hygiene problems to the spoon used that must be washed every time used.
- The time needed to prepare a cup is less in the new invention.
- The size of the automatic machine is much larger than that using the capsules.

DE 10 2006 002511 A1, FR 1 564 088 A and US 2002/050301 A1 disclose beverage dispense apparatuses using capsules containing a substance to be diluted by means of fluid to thereby provide the beverage.

The invention provides a capsule according to claim 1 and a coffee machine in combination with a capsule according to claim 6. Further embodiments of the invention are described in the dependent claims.

### Brief description of the drawings

**Fig. 1****:** represents a section view of the machine showing the capsule inserted upside down into the machine.
**Fig.2****:** represents a section view of the machine showing the free lip of the sealing film inserted by the pushing device between the jaws of the clamp.
**Fig.3****:** represents a section view of the machine showing the clamp closed on the free lip of the sealing film and the pushing device retracted.
**Fig.4****:** represents a section view of the machine showing the capsule with the sealing film peeled and the coffee powder falling into the coffee-pot through the funnel.
**Fig.5****:** represents a section view of the machine showing the free lip of the sealing film released from the clamp.
**Fig.6****:** represents a section view of the machine showing the empty capsule thrown into the waste bin.
**Fig.7****:** represents a section view of the machine showing the coffee-pot while serving the coffee beverage into the cup.
**Fig. 8****:** represents a top view of the capsule's body referred as (10)
**Fig. 9****:** represents a top view of the sealing film referred as ( 11 )
**Fig. 10****:** represents an exploded section view of the capsule showing the two parts referred as (10) - (11)
**Fig. 11****:** represents a section view of the capsule filled with "Lebanese or Turkish" coffee and sealed using the two parts (10) + (11).

This new invention comes to solve the above mentioned problems by keeping the coffee dose for one cup, packed accurately into the capsule, fresh and dry until opened by the **machine** to prepare the coffee beverage and the tomes needed to prepare a coffee cup is decreased.

### 1. Coffee machine:

The coffee machine is specially designed to prepare a cup of "Lebanese or Turkish" coffee using the above mentioned capsules as described in the following step by step explanations and schematics.

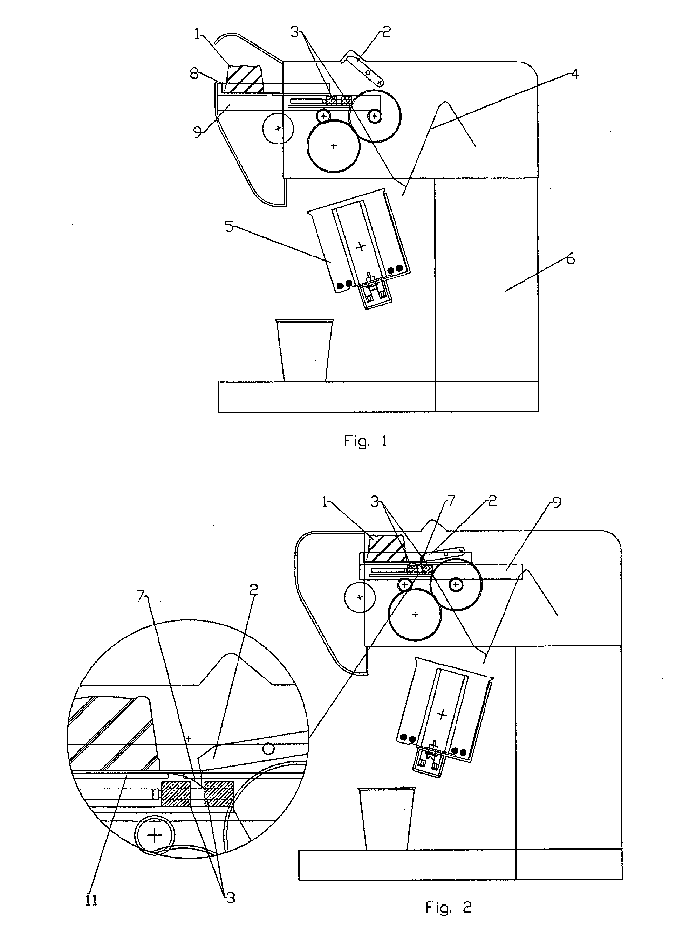

### 2. Coffee machine step 1 (Fig. 1):

The capsule (1) is inserted upside down into the capsule compartment (8) of the machine and the coffee preparation starts.

### 3. Coffee machine step 2 (Fig. 2):

The capsule (1) is pushed through the electromechanical system (9) to reach a position where a pushing device (2) moves downwards and inserts the free lip (7) of the sealing film (11), located below the "U" shape cutout, between the jaws (3) of a clamp.

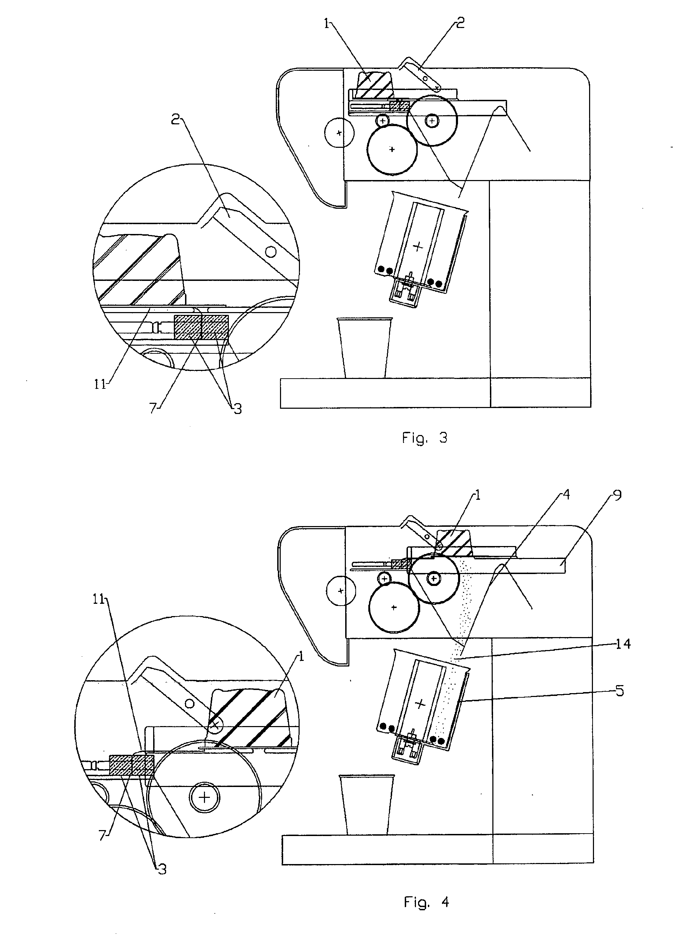

### 4. Coffee machine step 3 (Fig. 3):

Once the free lip (7) is between the jaws (3) of the clamp, the pushing device (2) retracts by moving back upwards and the clamp's jaws (3) closes tightly on the free lip (7) of the sealing film (11).

### 5. Coffee machine step 4 (Fig. 4):

The electromechanical system (9) continues pushing the capsule (1) while the free lip (7) of the sealing film is caught between the jaws (3) of the clamp which results in peeling the said sealing film (11) over a funnel (4) which collects all the coffee powder and sugar (14) falling from the capsule (1) into a coffee-pot (5) located under the said funnel (4).

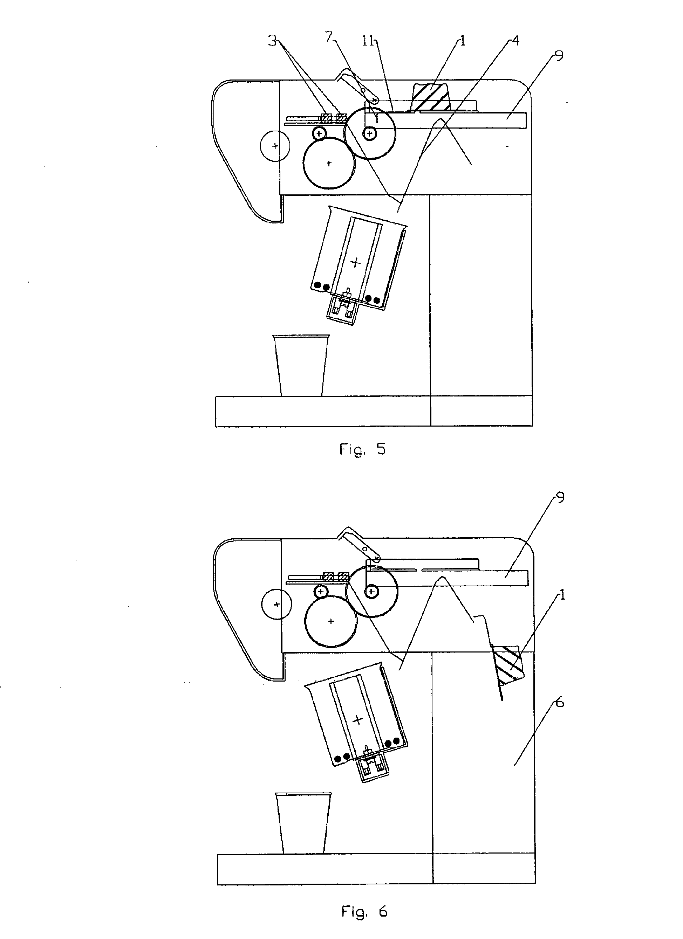

### 6. Coffee machine step 5 (Fig. 5):

The electromechanical system (9) continues pushing the capsule (1) and just before the sealing film (11) detaches from the capsule's body, the clamp's jaws (3) opens thus liberating the free lip (7) of the sealing film (11).

### 7. Coffee machine step 6 (Fig. 6):

The electromechanical system (9) continues pushing the empty capsule (1) and throws it into the waste bin (6).

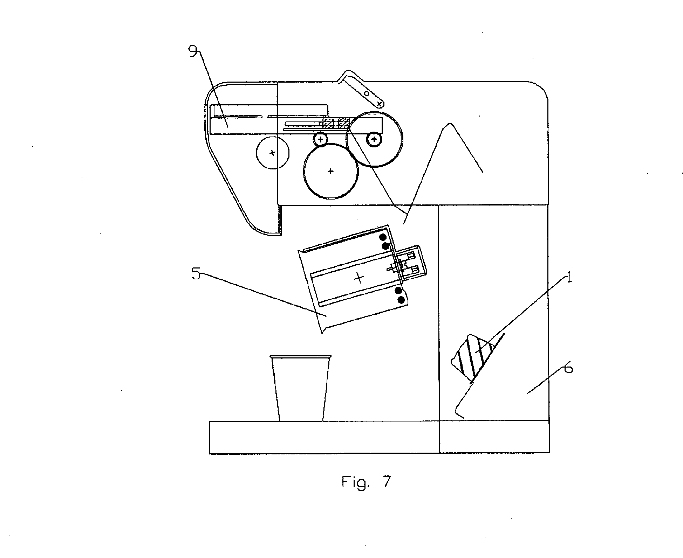

### 8. Coffee machine step 7 (Fig. 7):

While the coffee beverage is prepared automatically into the coffee-pot (5), the electromechanical system (9) returns back to its initial position and the coffee-pot (5) fully tilts forward to serve the coffee beverage into the cup. (End of cycle).

### 9. The capsule's body:

The capsule's body (10) is made from multilayer plastic material to preserve coffee freshness. It has a truncated cone shape cup ending with a circular shoulder (12) to facilitate the denesting of the empty capsules while they are stacked one into the other. This shoulder ends with a special shaped flat rim (13) having a "V" shape (15) on one side and round corners to fit exactly into the coffee machine compartment and a "U" shape cutout (16) to maintain the sealing film (11) in the right position for automatic peeling.
   The capsule's body has a width of 45 mm, a length of 57 mm and a height of 27 mm.

### 10. The sealing film:

The sealing film (11) is made from a thin flexible multilayer material to preserve coffee freshness, and welded on the flat rim (13) after coffee filling.

### 11. "Lebanese or Turkish" coffee capsules:

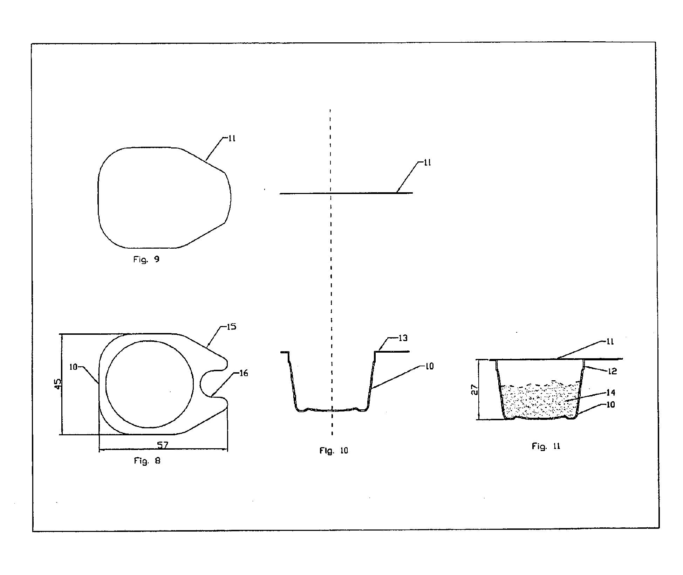

To prepare a cup of "Lebanese or Turkish" coffee, one dose of coffee powder (14) is filled into the capsule's body (10); sugar may be added over the coffee when needed. After filling, the capsule is sealed under modified atmosphere to guarantee freshness as shown in Fig. 11.

A coffee machine specially designed to prepare a cup of "Lebanese or Turkish coffee" by conveying a special coffee capsule through an electromechanical system which takes the said capsule from one side of the machine, peels its sealing film, empties its content into a coffee-pot and throws out the empty capsule into a waste bin.

A capsule composed from two parts, represented by the capsule's body and the sealing film. This capsule has a special shape, designed to fit in the above mentioned coffee machine to prepare a cup of "Lebanese or Turkish coffee" automatically.

### References of the components details:

(1) capsule filled with "Lebanese or Turkish coffee"
(2) pushing device
(3) clamp's jaws
(4) Funnel
(5) coffee-pot
(6) waste bin
(7) free lip of the sealing film
(8) capsule's compartment
(9) electromechanical system
(10) capsule's body
(11) sealing film
(12) shoulder on the body of the capsule
(13) flat rim
(14) "Lebanese or Turkish" coffee powder and sugar
(15) "V" shape on one side of the capsule's flat rim
(16) "U" shape cutout on the capsule's flat rim

## Claims

1. A capsule (1) composed from
a capsule body (10) and
a sealing film (11),
the body (10) being made from a multilayer plastic material and having a conical cup shape ending with a circular shoulder (12) and a flat rim (13), on which the sealing film (11) is welded,
the flat rim (13) having a V shape from one side with round corners to fit exactly in a coffee machine compartment (8), and further having a U-shape cut-out (16) to keep the sealing film (11) in a right position for automatic peeling,
the sealing film (11) having a free lip (7) which, in an upside-down position of the capsule (1), is located below the U-shape cut-out (16).

2. The capsule (1) according to claim 1, wherein the flat rim (13) has an overall width of 45mm and an overall length of 57mm

3. The capsule (1) according to claim 1, wherein the body (10) has an overall height of 27mm.

4. The capsule (1) according to claim 1, wherein the sealing film (11) is made from flexible multilayer film to preserve freshness.

5. The capsule (1) according to claim 1, wherein the capsule (1) is used to pack a single dose of Lebanese or Turkish coffee with or without sugar.

6. A coffee machine in combination with a capsule (1) according to any of the claims 1-5, designed to prepare a cup of Lebanese or Turkish coffee, the coffee machine comprising
a compartment (8), into which the capsule (1) can be inserted upside down,
a pushing device (2),
a clamp with jaws (3),
a coffee-pot (5),
a waste bin (6),
an electromechanical system (9), by which the capsule (1) can be pushed from the coffee machine compartment (8) to reach a position where the pushing device (2) moves downwards and inserts the free lip (7) of the sealing film (11) between the jaws (3) which, after the pushing device (2) has been retracted by moving back upward, can catch the free lip (7), so that by means of further pushing of the capsule (1) by the electromechanical system (9) the sealing film (11) is peeled from the body (10), the content of the capsule (1) is emptied into the coffee-pot (5), and the empty capsule (1) is thrown out into the waste bin (6), and
a funnel for collecting the content falling from the peeled capsule (1), wherein the coffee-pot (5) is arranged below the funnel,
wherein the electromechanical system (9) and the jaws (3) are such that the empty capsule (1) is thrown into the waste bin (6) after the jaws (3) liberate the free lip (7) of the sealing film (11) just before it detaches from the capsule (1).

7. The coffee machine in combination with the capsule (1) according to claim 6, wherein the.coffee-pot (5) is arranged so that it can be tilted forwards to serve the beverage into a cup.

## Patentansprüche

1. Eine Kapsel (1), aufgebaut aus:
einem Kapselkörper (10) und
einer Abdichtungsfolie (11),
wobei der Körper (10) aus einem Mehrschicht-Kunststoffmaterial hergestellt ist und eine konische Becherform hat, die mit einer kreisförmigen Schulter (12) und einem flachen Rand (13) endet, auf den die Abdichtungsfolie (11) aufgeschweißt ist,
wobei der flache Rand (13) von einer Seite aus eine V-Form mit runden Ecken hat, um genau in ein Kaffeemaschinenfach (8) zu passen, und ferner einen U-förmigen Ausschnitt (16) hat, um die Abdichtungsfolie (11) in einer richtigen Position für ein automatisches Abziehen zu halten,
wobei die Abdichtungsfolie (11) eine freie Lippe (7) hat, die in einer umgedrehten Position der Kapsel (1) unter dem U-förmigen Ausschnitt (16) angeordnet ist.

2. Die Kapsel (1) gemäß Anspruch 1, wobei der flache Rand (13) eine Gesamtbreite von 45 mm und eine Gesamtlänge von 57 mm hat.

3. Die Kapsel (1) gemäß Anspruch 1, wobei der Körper (10) eine Gesamthöhe von 27 mm hat.

4. Die Kapsel (1) gemäß Anspruch 1, wobei die Abdichtungsfolie (11) aus flexibler Mehrschichtfolie hergestellt ist, um die Frische zu erhalten.

5. Die Kapsel (1) gemäß Anspruch 1, wobei die Kapsel (1) verwendet wird, um eine Einzeldosis libanesischen oder türkischen Kaffee mit oder ohne Zucker zu verpacken.

6. Eine Kaffeemaschine in Kombination mit einer Kapsel (1) gemäß irgendeinem der Ansprüche 1 bis 5, die gestaltet ist, um eine Tasse libanesischen oder türkischen Kaffee zuzubereiten, wobei die Kaffeemaschine aufweist:
ein Fach (8), in welches die Kapsel (1) umgedreht eingesetzt werden kann,
eine Drückvorrichtung (2),
eine Klemmvorrichtung mit Klemmbachen (3),
ein Kaffeegefäß(5),
einen Abfallbehälter (6),
ein elektromechanisches System (9), mittels dessen die Kapsel (1) aus dem Kaffeemaschinenfach (8) gedrückt werden kann, um eine Position zu erreichen, in der sich die Drückvorrichtung (2) nach unten bewegt und die freie Lippe (7) der Abdichtungsfolie (11) zwischen die Klemmbacken (3) einsetzt, die, nachdem die Drückvorrichtung (2) durch ein Zurückbewegen in Richtung nach oben zurückgezogen wurde, die freie Lippe (7) ergreifen können, so dass mittels des weiteren Drückens der Kapsel (1) durch das elektromechanische System (9) die Abdichtungsfolie (11) von dem Körper (10) abgezogen wird, der Inhalt der Kapsel (1) in das Kaffeegefäß (5) hineingeleert und die leere Kapsel (1) in den Abfallbehälter (6) geworfen wird, und
einen Trichter zum Sammeln des Inhalts, der aus der abgezogenen Kapsel (1) herausfällt, wobei das Kaffeegefäß (5) unter dem Trichter angeordnet ist,
wobei das elektromechanische System (9) und die Klemmbacken (3) derart sind, dass die leere Kapsel (1) in den Abfallbehälter (6) geworfen wird, nachdem die Klemmbacken (3) die freie Lippe (7) der Abdichtungsfolie (11) befreien, genau bevor sie von der Kapsel (1) abgetrennt wird.

7. Die Kaffeemaschine in Kombination mit der Kapsel (1) gemäß Anspruch 6, wobei das Kaffeegefäß (5) derart angeordnet ist, dass es nach vorne gekippt werden kann, um das Getränk in eine Tasse auszuschenken.

## Revendications

1. Une capsule (1) composée par 1. Une capsule (1) composée par
un corps de capsule (10) et
un film de scellage (11),
le corps (10) étant fabriqué à partir d'une matière plastique multicouches et ayant une forme de gobelet conique se terminant par un épaulement circulaire (12) et un bord plat (13), auquel le film de scellage (11) est soudé,
le bord plat (13) ayant une forme de V à partir d'un côté avec les coins arrondis, pour s'ajuster exactement dans un compartiment de machine à café (8), et ayant en outre une découpe en forme de U (16), afin de garder le film de scellage (11) dans une bonne position pour un enlèvement automatique,
le film de scellage (11) ayant une lèvre libre (7) qui, dans une position à l'envers de la capsule (1) est positionnée au-dessous de la découpe en forme de U (16).

2. La capsule (1) selon la revendication 1, dans laquelle le bord plat (13) a une largeur totale de 45 mm et une longueur totale de 57 mm.

3. La capsule (1) selon la revendication 1, dans laquelle le corps (10) a une hauteur totale de 27 mm.

4. La capsule (1) selon la revendication 1, dans laquelle le film de scellage (11) est fabriqué à partir d'un film multicouches flexible pour préserver la fraîcheur.

5. La capsule (1) selon la revendication 1, dans laquelle la capsule (1) est utilisée pour emballer une dose unique de café libanais ou turc avec ou sans sucre.

6. Une machine à café en combinaison avec une capsule (1) selon l'une quelconque des revendications 1 à 5, désignée pour la préparation d'une tasse de café libanais ou turc, la machine à café comportant :
un compartiment (8) dans lequel la capsule (1) peut être insérée à l'envers,
un dispositif poussoir (2),
une pince avec des mâchoires (3),
un récipient de café (5),
un récipient à déchets (6),
un système électromécanique (9), par lequel la capsule (1) peut être poussée à partir du compartiment de machine à café (8) pour atteindre une position où le dispositif poussoir (2) descend et insère la lèvre libre (7) du film de scellage (11) entre les mâchoires (3) qui, après que le dispositif poussoir (2) a été retiré en se replaçant vers le haut, peuvent saisir la lèvre libre (7) de sorte que, par le biais de pousser la capsule (1) plus avant par le système électromécanique (9), le film de scellage (11) est pelé du corps (10), le contenu de la capsule (1) est vidé dans le récipient de café (5) et la capsule (1) vide est jetée dans le récipient à déchets (6), et
un bec pour amasser le contenu tombant de la capsule pelée (1), le récipient de café (5) étant disposée au-dessous du bec,
dans laquelle le système électromécanique (9) et les mâchoires (3) sont de manière à ce que la capsule vide (1) soit jetée dans le récipient à déchets (6) après que les mâchoires (3) ont libéré la lèvre libre (7) du film de scellage (11) justement avant que celui-ci soit détaché de la capsule (1).

7. La machine à café en combinaison avec la capsule (1) selon la revendication 6, dans laquelle le récipient de café (5) est disposé de sorte qu'il peut être versé vers l'avant, afin de servir le boisson dans une tasse.
